Europäisches Patentamt

European Patent Office

Office européen des brevets

(11) Veröffentlichungsnummer: **0 480 222 A2**

## EUROPÄISCHE PATENTANMELDUNG

(21) Anmeldenummer: **91116106.5**

(51) Int. Cl.5: **G01B 7/04**

(22) Anmeldetag: **21.09.91**

(30) Priorität: **06.10.90 DE 4031931**

(43) Veröffentlichungstag der Anmeldung:
**15.04.92 Patentblatt 92/16**

(84) Benannte Vertragsstaaten:
**AT BE CH DE DK ES FR GB GR IT LI LU NL SE**

(71) Anmelder: **FEINPRÜF PERTHEN GmbH**
**Feinmess- und Prüfgeräte, Brauweg 38**
**W-3400 Göttingen(DE)**

(72) Erfinder: **Fahl, Christoph**
**von-Bar-Strasse 10**
**W-3400 Göttingen(DE)**

(74) Vertreter: **Rüger, Rudolf, Dr.-Ing. et al**
**Patentanwälte Dr.-Ing. R. Rüger Dipl.-Ing. H.P.**
**Barthelt Webergasse 3 Postfach 348**
**W-7300 Esslingen/Neckar(DE)**

(54) **Induktiver Längenmesstaster.**

(57) Ein induktiver Längenmeßtaster weist einen Grundkörper auf, in dem eine Taststange längsverschieblich geführt ist. Der Grundkörper enthält ferner eine mit einer Wechselspannung zu beaufschlagende Primärwicklung sowie eine an eine Auswerteelektronik anschließbare Sekundärwicklung. Beide Wicklungen sind über ferromagnetische Rückschlußeinrichtungen magnetisch miteinander gekoppelt.

Um die Linearität des Längenmeßtasters bei gegebenem Hub zu verbessern bzw. bei gegebener Linearität den Hub zu vergrößern, sind sämtliche im Feld der Primärwicklung befindlichen Teile der ferromagnetischen Rückschlußeinrichtung ortsfest.

Fig. 1

EP 0 480 222 A2

Die Erfindung betrifft einen induktiven Längenmeßtaster mit den Merkmalen des Oberbegriffs des Anspruches 1.

Induktive Längenmeßtaster verwenden zwei transformatorisch miteinander gekoppelte Wicklungen, von denen die eine aus einer Wechselspannungsquelle mit Wechselspannung beaufschlagt wird. Diese Wicklung wird als Primärwicklung bezeichnet. An der anderen Wicklung, der Sekundärwicklung, ist der Eingang einer Auswerteelektronik angeschlossen.

Beide Wicklungen sind in dem Grundkörper ortsfest angeordnet. Um die Spannung an der Sekundärwicklung entsprechend der Lage der Taststange zu verändern, ist mit der Taststange ein ferromagnetisches Rückschlußelement verbunden, das in den Feldern der beiden Spulen beweglich ist, um den Kopplungsgrad zwischen den Wicklungen zu verändern. Bei diesen Längenmeßtastern ist allerdings der Zusammenhang zwischen der Ausgangsspannung der Sekundärwicklung und der Auslenkung der Taststange nicht linear. Es kann deswegen nur ein kleiner Hub ausgenutzt werden, wenn der Linearitätsfehler ein bestimmtes Maß nicht übersteigen soll. Umgekehrt muß bei einem größeren Hub ein entsprechender größerer Linearitätsfehler in Kauf genommen werden.

Außerdem verändert sich bei den bekannten induktiven Längenmeßtastern mit feststehender Primär- und Sekundärwicklung die Induktivität der Eingangswicklung bei der Verschiebung des die beiden Spulen koppelnden Weicheisenteils, so daß alles in allem eine etwa kubische Änderung der Empfindlichkeit des Längenmeßtasters zustandekommt.

Die Änderungen der Eingangsinduktivität der Primärspule können bei hochgenauen Längenmeßtastern nicht vernachlässigt werden, denn sie führen zu nicht kompensierbaren Unterschiedlichen Spannungsabfällen auf der Zuleitung bzw. dem Innenwiderstand des die Primärwicklung treibenden Spannungsquelle.

Ausgehend hiervon ist es Aufgabe der Erfindung, einen induktiven Längenmeßtaster zu schaffen, der sich bei gleichem Hub durch eine bessere Linearität oder bei gleichen Anforderungen an die Linearität wie beim Stand der Technik durch einen größeren ausnutzbaren Hub auszeichnet.

Diese Aufgabe wird erfindungsgemäß durch den induktiven Längenmeßtaster mit den Merkmalen des Anspruches 1 gelöst.

Die ortsfeste Anordnung sämtlicher Teile des ferromagnetischen Rückschlusses führen zu im wesentlichen konstanten Feldverhältnissen für die Primärwicklung, wodurch Rückwirkungen auf die speisende Spannungsquelle vermieden werden. Außerdem bleiben dadurch die Verhältnisse zwischen Real- und Blindanteil in dem die Spannungsquelle, die Zuleitungen und die Primärwicklung enthaltenden Stromkreis weitgehend konstant, womit insgesamt die an der Primärwicklung anliegende Spannung im Meßbereich von der Auslenkung praktisch unabhängig wird.

Sehr günstige Feldverhältnisse kommen zustande, wenn die ferromagnetische Rückschlußeinrichtung aus einem inneren Teil sowie einem äußeren, den inneren Teil konzentrisch umgebenden Teil besteht. Es wird ferner dadurch erreicht, daß hinsichtlich der Sekundärwicklung günstige Feldverhältnisse auftreten und die Streufelder außerhalb der ferromagnetischen Rückschlußeinrichtung nahezu vernachlässigbar sind. Schließlich vermindert die Anordnung die Empfindlichkeit des Längenmeßtasters gegenüber äußeren Störfeldern.

Der Aufbau des Längenmeßtasters wird sehr einfach, wenn die Taststange konzentrisch zu dem Luftspalt verläuft und somit die Feldverhältnisse in dem inneren Teil der ferromagnetischen Rückschlußeinrichtung im wesentlichen rotationssymmetrisch sind. Dabei ist es besonders vorteilhaft, wenn der Luftspalt eine zylindrische Form aufweist, die sich dadurch ergibt, daß der innere Teil eine im wesentlichen rotationssymmetrische Außenumfangsfläche und der äußere Teil eine im wesentlichen rotationssymmetrische Innenumfangsfläche oder Bohrung aufweist.

Wenn die Primärwicklung auf dem inneren Teil angeordnet ist, ergeben sich einfache Montageverhältnisse und es läßt sich weiterhin ein symmetrisch ausnutzbarer Taststangenhub erreichen, wenn die Primärwicklung symmetrisch bezüglich der Länge des inneren Teils angeordnet ist.

Die Aufteilung der Sekundärwicklung in zwei Wicklungsteile, die bezüglich der Primärwicklung symmetrisch liegen, ermöglicht die Unterdrückung der Linearitätsfehler mit gerader Funktion und gestattet außerdem bei entsprechender phasenempfindlicher Demodulation in der Auswerteelektronik zu erkennen, in welcher Richtung sich die Taststange, ausgehend von der Nullstellung, bewegt.

Es ist dabei besonders günstig, wenn die Primärwicklung in einer Ausdrehung oder einem Einstich des inneren Teils der ferromagnetischen Rückschlußeinrichtung untergebracht ist. Dadurch kann der Luftspalt auf das für die Bewegung der Sekundärwicklung unbedingt notwendige Maß reduziert werden.

Die Sekundärspule sitzt vorzugsweise auf einem etwa becherartigen Spulenträger, dessen Kragen oder Rand in den Luftspalt hineinreicht und auf den in entsprechenden Einstichen oder Ausdrehungen die Sekundärwicklung aufgewickelt ist.

Die Empfindlichkeit gegenüber Fremdfeldern oder in der Nähe befindlichen ferromagnetischen oder magnetischen Teilen des induktiven Längenmeßtasters wird verbessert, wenn die Länge des äußeren Teils der ferromagnetischen Rückschlußeinrichtung größer ist als die Länge des inneren Teils der ferromagnetischen Rückschlußeinrichtung, weil dann der äußere Teil gleichsam als eine Art Abschirmung wirkt. Hierbei ist vorzugsweise der innere Teil symmetrisch bezüglich des äußeren Teils angeordnet, um einerseits die Empfindlichkeit gegenüber Fremdfeldern von beiden Seiten her gleich gering zu machen und das Feld der Primärwicklung für die Sekundärwicklung nicht unsymmetrisch zu verändern.

Eine weitere Verbesserung gegenüber äußeren Fremdfeldern und in der Nähe befindlichen Eisenmaterial kann erreicht werden, wenn der Grundkörper in einem Gehäuse aus Weicheisen, beispielsweise Mumetall, untergebracht ist. Je nach Gestalt des Grundkörpers kann die Weicheisenabschirmung zylindrisch oder quaderförmig sein. Die Ausführungsform richtet sich im wesentlichen nach der äußeren Gestalt des Grundkörpers bzw. eventuell weiteren innerhalb der Abschirmung unterzubrin-genden Teilen, wie Impedanzwandler, Vorverstär-ker u.dgl.

Ein einfacher Aufbau des Längenmeßtasters wird ferner durch die Verwendung von Ferritmaterial für den inneren Teil des magnetischen Rückschlusses begünstigt. Dieser kann sehr einfach auf die gewünschte Form gebracht werden und zeichnet sich durch gute Homogenität bzw. Isotropie der Permeabilität aus, was wiederum die Gleichmäßigkeit des Feldes der Primärwicklung begünstigt. Der äußere Teil der ferromagnetischen Rückschlußeinrichtung besteht dagegen bevorzugt aus einem zu einem Rohr gewickelten Blechstreifen aus Weicheisen, da sich hierdurch einfacher ein dünnwandiger Zylinder erzeugen läßt, der auch gegenüber Erschütterungen weniger empfindlich ist. Durch die Verwendung des Blechstreifens ist es auch möglich, die Kornrichtung in dem Blechstreifen im Sinne einer günstigen Feldverteilung im Luftspalt zu wählen.

Schließlich läßt sich der Feldverlauf in dem Luftspalt einfach dadurch in gewünschter Weise verändern, daß die in dem Luftspalt liegende Kante des Blechstreifens, der im aufgewickelten Zustand den äußeren Teil der ferromagnetischen Teil der Rückschlußeinrichtung bildet, nicht parallel zu der Erzeugenden des von dem gewickelten Blechstreifen gebildeten Zylinders liegt. Es ist beispielsweise möglich, diese Kante gekrümmt verlaufen zu lassen oder wie eine Pfeilspitze zuzuschneiden.

In der Zeichnung sind Ausführungsbeispiele des Gegenstandes der Erfindung dargestellt. Es zeigen:

Fig. 1 einen induktiven Längenmeßtaster gemäß der Erfindung in einem axialen Schnitt,

Fig. 2 einen Ausschnitt des den äußeren Teil des ferromagnetischen Rückschlusses bildenden Blechstreifens vor dem Wickeln und

Fig. 3 einen Längenmeßtaster gemäß der Erfindung mit einem quaderförmigen Abschirmgehäuse in einer perspektivischen Explosionsdarstellung.

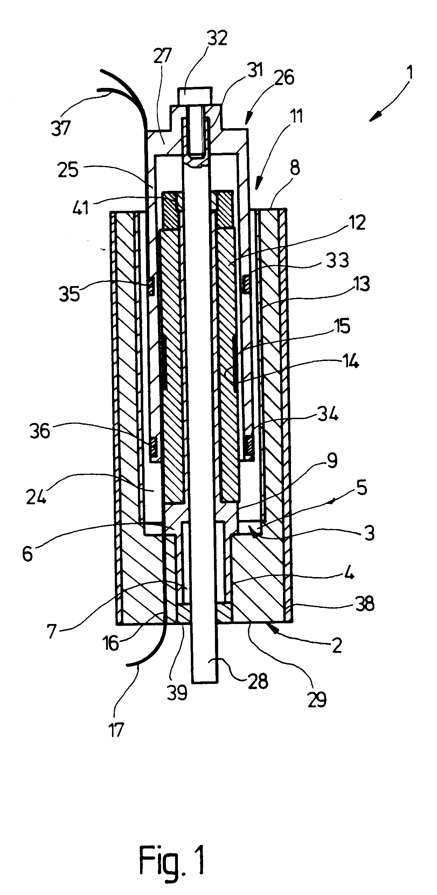

In Fig. 1 ist ein induktiver Längenmeßtaster 1 im Längsschnitt veranschaulicht, der einen zylindrischen, aus Messing bestehenden Grundkörper 2 aufweist. Der Grundkörper 2 enthält eine koaxiale Stufenbohrung 3, die von einem Abschnitt 4 mit kleinerem Durchmesser und einem Abschnitt 5 mit größerem Durchmesser gebildet ist. In dem Abschnitt 4 steckt ein rohrförmiger Träger 6, der eine abgestufte zylindrische Bohrung 7 enthält, und sich durch den gesamten Abschnitt 5 der Stufenbohrung 3 hindurch bis zu einer planen Stirnseite 8 des Grundkörpers 2 erstreckt. Der Träger 6 weist eine Schulter 9 auf,die auf der in dem Übergang von dem Abschnitt 4 zu dem Abschnitt 5 entstehenden planen Ringschulter aufliegt. Es entsteht dadurch in dem Abschnitt 5 der Stufenbohrung 3 ein zylindrischer Spalt, der koaxial zu der Längsachse der Stufenbohrung 3 ist. In dem einerseits von der zylindrischen Außenumfangsfläche des Trägers 6 und andererseits von der zylindrischen Innenumfangsfläche des Abschnittes 5 begrenzten Ringspalt befindet sich eine ferromagnetische Rückschlußeinrichtung 11, die aus magnetisch weichem Material besteht und ein inneres Teil 12 sowie ein äußeres Teil 13 aufweist.

Der innere Teil 12 ist ein rohrförmiges Ferritstück, das fest auf dem Träger 6 aufgesteckt ist und bis zu der Ringschulter 9 reicht. Der innere Teil 12 hat eine zylindrische Außenumfangsfläche, die ebenfalls koaxial zu der Achse der Stufenbohrung 3 liegt. Etwa in der Mitte des inneren Teiles 12 liegt eine Eindrehung 14, in der eine Primärwicklung 15 angeordnet ist, die aus mehreren Drahtwindungen besteht. Die Enden der Primärwicklung 15 sind durch eine Bohrung 16 an der Unterseite des Grundkörpers 2 als Anschlußdrähte 17 herausgeführt. Über die Anschlußdrähte 17 wird beim Betrieb des induktiven Längenmeßtasters 1 eine Wechselspannung an die Primärwicklung 15 angelegt.

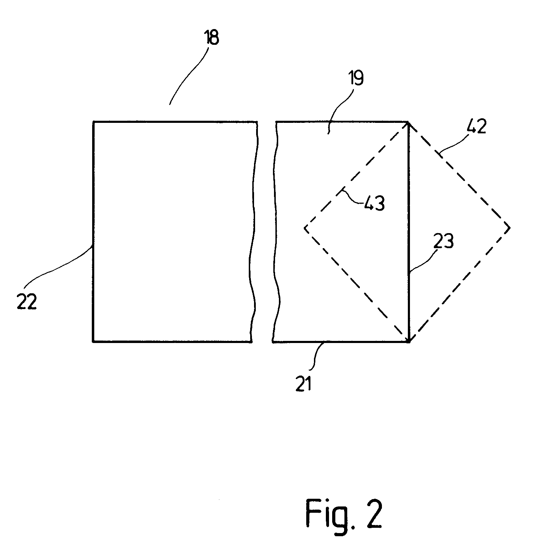

Der äußere Teil 13 der ferromagnetischen Rückschlußeinrichtung 11 ist ein dünnwandiges Rohr, das fest in dem Abschnitt 5 der Stufenbohrung 3 steckt und sich fast über die gesamte Länge des Abschnittes 5 bis hin zu der Stirnfläche 8 des Grundkörpers 2 erstreckt. Damit in dem äußeren Teil möglichst geringe Wirbelstromverluste auftreten und andererseits eine genügende Festigkeit zustandekommt, besteht der äußere Teil 13 aus einem zu dem betreffenden Rohr gewickelten Blechstreifen 18, wie er in Fig. 2 verkürzt dargestellt ist. Der Blechstreifen 18 wird von zwei zueinander parallelen Kanten 19 und 21 begrenzt, die im gewickelten Zustand die Stirnseiten des äußeren Teils 13 bilden. Ferner ist der Blechstreifen 18 von einer Schnittkante 22 sowie einer Schnittkante 23 begrenzt, die sich zwischen den zueinander parallelen Kanten 19 und 21 erstrecken. Im aufgewickelten Zustand ist beispielsweise die Schnittkante 22 außen und die Schnittkante 23 liegt innerhalb des durch die Aufwicklung des Blechstreifens 18 entstandenen Rohres.

Im montierten Zustand begrenzt die Innenseite des äußeren Teils 13 und die zylindrische Außenseite des Teils 12 einen magnetisch wirksamen zylindrischen Luftspalt 24, durch den im wesentlichen radial die Feldlinien hindurchgehen, die von dem Feld der Primärwicklung 15 hervorgerufen werden.

In dem zylindrischen Luftspalt 24, der aufgrund der Anordnung wiederum koaxial zu der Achse der Stufenbohrung 3 ist, bewegt sich ein rohrförmiger Kragen 25 eines etwa becherförmigen Spulenträgers 26, der mit seinem offenen Ende voraus von der Stirnseite 8 her in den zylindrischen Luftspalt 24 eintaucht. An dem aus dem Luftspalt 24 herausstehenden Ende ist der Spulenträger 26 durch einen Boden 27 verschlossen.

Der Spulenträger 26 ist mit seinem Boden 27 an dem rückwärtigen Ende einer zylindrischen Taststange 28 befestigt, die durch den Innenraum 7 des Trägers 6 hindurchgeführt. Die Taststange 28 steht, wie Fig. 1 erkennen läßt, sowohl über die Stirnseite 8 als auch eine der Stirnseite 8 gegenüberliegende Stirnseite 29 des Grundkörpers 2 über. Zur Befestigung des Spulenträgers 26 an der Taststange 28 enthält letztere ein Innengewinde 31, in das eine durch eine entsprechende Bohrung in dem Boden 27 hindurchführende Befestigungsschraube 32 eingedreht ist.

Die zylindrische Außenumfangsfläche des Kragens 25 ist mit zwei längs dem Umfang verlaufenden Eindrehungen 33 und 34 versehen, die, bezogen auf die Längserstreckung des inneren Teils 12, symmetrisch zu der Primärwicklung 15 liegen, wenn sich die Taststange 28, bezogen auf ihren konstruktiv vorgesehenen Hub, in der Mittelstellung befindet.

In jeder der beiden Ausdrehungen 33, 34 liegt eine Wicklung 35 bzw. 36, die zusammen eine Sekundärwicklung bilden. Die beiden Teilwicklungen 35 und 36 der Sekundärwicklung sind elektrisch hintereinandergeschaltet und mit nach außen führenden Anschlußdrähten 37 verbunden. An diesen Anschlußdrähten 37 wird bei der Benutzung des Längenmeßtasters 1 eine nicht gezeigte Auswerteelektronik angeschlossen, die an ihrem mit der Sekundärwicklung 35/36 verbundenen Eingang hochohmig ist, um die Wicklung elektrisch nur gering zu belasten.

Die beiden Teilwicklungen 35 und 36 liegen, wie die Figur erkennen läßt, in einem deutlichen Abstand von den axialen Enden des inneren Teils 12 der ferromagnetischen Rückschlußeinrichtung 11, und zwar genauer gesagt, etwa in der Mitte desjenigen Abschnitts des inneren Teils 12, der einerseits von der Primärwicklung 14 und andererseits von dem entsprechend benachbarten stirnseitigen Ende des inneren Teils 12 begrenzt ist. Dadurch wird ein günstiger Verlauf der Kennlinie des induktiven Längenmeßtasters 1 erreicht, d.h. der gewünschte Zusammenhang zwischen der Ausgangsspannung der Sekundärwicklung 35/36 und der Auslenkung der Taststange 28.

Um eine Beeinflussung des Meßwertes durch Fremdfelder oder durch in der Nähe befindliche ferromagnetische Teile weitgehend auszuschließen, ist als erste Maßnahme vorgesehen, den äußeren Teil 13 der Rückschlußeinrichtung 11, bezogen auf die axiale Erstreckung, länger zu gestalten als den darin befindlichen inneren Teil 12. Es wird dadurch vermieden, daß das Feld der Primärwicklung 15 in nennenswertem Umfang über die Stirnseiten der Rückschlußeinrichtung 11 austritt. Eine zweite Schutzmaßnahme besteht darin, den Grundkörper 2 in ein Abschirmgehäuse 38 aus wiederum magnetisch weichem Eisen zu stecken, um das Einstreuen von Fremdfeldern in den Luftspalt 24 auszuschließen. Dabei ist es gegebenenfalls günstig, die Abschirmung auch an den beiden Stirnseiten 8 und 29 anzubringen.

Der Vollständigkeit halber sei schließlich noch erwähnt, daß die zylindrische Taststange 28 in Lagerbüchsen 39 und 41 längsverschieblich geführt ist, die vor den beiden Stirnenden des Trägers 6 angeordnet sind. Die Federeinrichtungen, die dazu dienen, die Taststange 28 in die Nullstellung zu bringen, oder in eine Endlage vorzuspannen, sind der Übersichtlichkeit halber ebenso weggelassen wie eventuell vorhandene Endanschläge zur Begrenzung des Hubs der Taststange 28.

Bei der Verwendung des insoweit beschriebenen Längenmeßtasters wird, wie oben erwähnt, die Primärwicklung 15 an eine Wechselspannungsquelle über die Anschlußdrähte 17 angeschlossen und die Anschlußdrähte 37 werden mit dem Eingang einer Auswerteelektronik verbunden, die eine phasenempfindliche Gleichrichtereinrichtung enthält. In der Mittenstellung der Taststange 28 liegen die beiden Teilwicklungen 35 und 36 symmetrisch bezüglich der Primärwicklung 15, so daß in beiden Teilwicklungen Wechselspannungen erzeugt werden, die betragsmäßig gleich groß, jedoch entgegengerichtet sind, weil die magnetische Durchflutung in beiden Teilwicklungen 35, 36 gleiches Vorzeichen hat und die Teilwicklungen gegensinnig hintereinander geschaltet sind. Die Ausgangsspannung, die an den Anschlußdrähten 37 gemessen werden kann, ist deswegen null. Sobald nun die Taststange 28 ausgelenkt wird, beispielsweise weil sie mit einem zu vermessenden Gegenstand in Berührung gebracht wird, verschiebt sich der mit der Taststange 28 verbundene Spulenträger 26 längs der axialen Erstreckung des Luftspaltes 24, wodurch eine der Teilwicklungen 35 oder 36 näher an die Primärwicklung 15 herangebracht wird, während sich die andere um das gleiche Maß von der Primärwicklung 15 entfernt. Dadurch ändert sich die in den Teilwicklungen 35, 36 induzierte Spannung betragsmäßig. Der betragsmäßige Unterschied zwischen den Spannungen in den Teilwicklungen 35, 36 entspricht der Verschiebung der Taststange 28, während in dem Vorzeichen der Spannungsdifferenz nach der phasenempfindlichen Gleichrichtung die Richtung der Auslenkung der Taststange 28 enthalten ist.

Wenn die Kennlinie des Längenmeßtasters 1 verändert werden soll, d.h. der Zusammenhang zwischen der von der Sekundärwicklung 35/36 abgegebenen Spannung als Funktion der Verschiebung der Taststange 28, kann dies in einfacher Weise dadurch geschehen, daß bei dem Blechstreifen 18, der den äußeren Teil 13 der Rückschlußeinrichtung 11 bildet, die innenliegende Kante 23 nicht gerade abgeschnitten wird. Denn, wenn sie gerade abgeschnitten ist, liegt die Kante 23 parallel zu der Erzeugenden der Mantelfläche des äußeren Teiles 13. Sie kann stattdessen auch, wie in Fig. 2 dargestellt, einen von der Geraden abweichenden Verlauf, beispielsweise wie durch die gestrichelten Linien 42 oder 43 gezeigt, aufweisen. Entsprechend wird die Feldverteilung längs dem Luftspalt 24 beeinflußt.

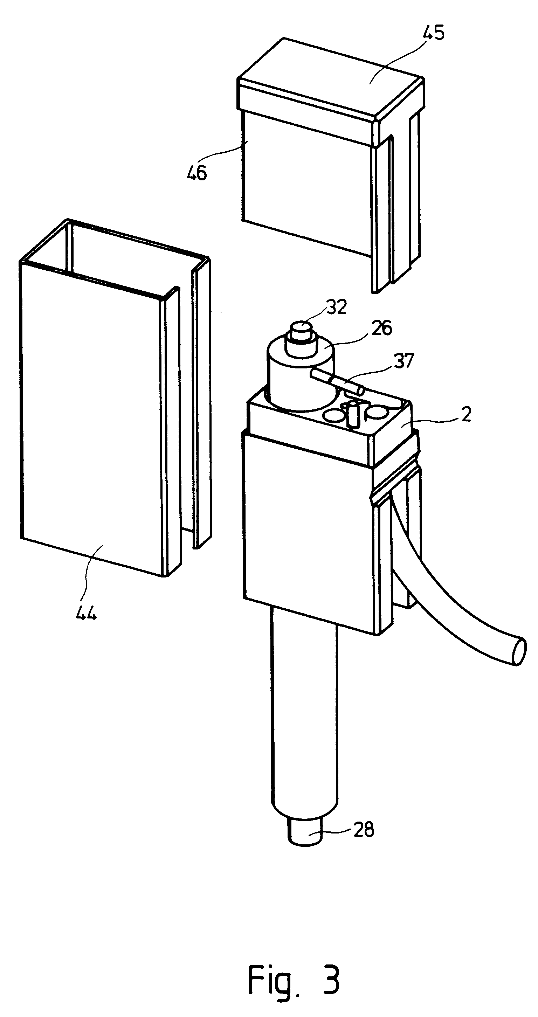

Fig. 3 zeigt schließlich ein Ausführungsbeispiel des Längenmeßtasters 1, bei dem der Grundkörper 2 etwa quaderförmige Gestalt aufweist und weitere, nicht näher bezeichnete Öffnungen und Ausnehmungen, beispielsweise zur Unterbringung von Impedanzwandlern u.dgl. enthält. Auch in diesem Falle ist es möglich, ein Abschirmungsgehäuse zu verwenden, das im zusammengesetzten Zustand den Grundkörper 2 weitgehend umgibt. Das Gehäuse weist hierbei einen Abschnitt 44 auf, der nach Art eines längsgeschlitzten Vierkantrohres ausgebildet ist und im montierten Zustand der Länge nach über den Grundkörper 2 geschoben ist. In eines der offenen Enden des Rohrabschnittes 44 ist eine Kappe 45 eingesteckt, die einen in dem Rohrabschnitt 44 sitzenden Kragen 46 trägt. Ansonsten ist der Aufbau innerhalb des Grundkörpers 2, soweit er die Anordnung der Primär- und der Sekundärwicklung 15 bzw. 35/36 und der Rückschlußeinrichtung anbelangt, genauso,wie dies anhand der Fig. 1 und 2 erläutert ist.

**Patentansprüche**

1. Induktiver Längenmeßtaster (1) mit einem Grundkörper (2), in dem eine Taststange (28) längsverschieblich geführt ist und in dem eine mit einer Wechselspannung zu beaufschlagende Primärwicklung (15) sowie eine an eine Auswerteelektronik anschließbare Sekundärwicklung (35/36) enthalten ist, die über eine ferromagnetische Rückschlußeinrichtung (11) magnetisch miteinander gekoppelt sind, dadurch gekennzeichnet, daß sämtliche, im Feld der Primärwicklung (15) befindlichen Teile (2, 13) der ferromagnetischen Rückschlußeinrichtung (11) in dem Grundkörper (2) ortsfest sitzen.

2. Längenmeßtaster nach Anspruch 1, dadurch gekennzeichnet, daß die Primärwicklung (15) ortsfest und die Sekundärwicklung (35/36) derart mit der Taststange (28) mechanisch verbunden ist, daß sie mit dieser zusammen in dem Feld der Primärwicklung (15) beweglich ist.

3. Längenmeßtaster nach Anspruch 1, dadurch gekennzeichnet, daß die ferromagnetische Rückschlußeinrichtung (11) aus einem inneren Teil (12) sowie einem den inneren Teil (12) konzentrisch umgebenden äußeren Teil (13) besteht, die zusammen einen Luftspalt (24) begrenzen, in dem eine Sekundärwicklung (35/36) angeordnet ist.

4. Längenmeßtaster nach Anspruch 3, dadurch gekennzeichnet, daß die Taststange (28) konzentrisch zu dem Luftspalt (24) verläuft.

5. Längenmeßtaster nach Anspruch 3, dadurch gekennzeichnet, daß der Luftspalt (24) zylindrische Gestalt hat.

6. Längenmeßtaster nach Anspruch 3, dadurch gekennzeichnet, daß die auf dem inneren Teil (12) ortsfest sitzende Primärwicklung (15) symmetrisch bezüglich der axialen Erstreckung des inneren Teils (12) der ferromagnetischen Rückschlußeinrichtung (11) angeordnet ist.

7. Längenmeßtaster nach Anspruch 3, dadurch gekennzeichnet, daß die auf dem inneren Teil (12) der ferromagnetischen Rückschlußeinrichtung (11) angeordnete Primärwicklung (15) in einer Ausdrehung (14) auf der Außenumfangsfläche des inneren Teils (12) angeordnet ist.

8. Längenmeßtaster nach Anspruch 3, dadurch gekennzeichnet, daß die auf dem inneren Teil (12) der ferromagnetischen Rückschlußeinrichtung (11) angeordnete Primärwicklung (15) ungeteilt ist.

9. Längenmeßtaster nach Anspruch 3, dadurch gekennzeichnet, daß mit der Taststange (28) ein Spulenträger (26) verbunden ist, der mit seinem Kragen (25) in den Luftspalt (24) hineinreicht und auf dem die Sekundärwicklung (35/36) angeordnet ist.

10. Längenmeßtaster nach Anspruch 9, dadurch gekennzeichnet, daß die auf dem Spulenträger (26) angeordnete Sekundärwicklung (35/36) zweiteilig ist und daß die beiden mit Abstand zueinander angeordneten Wicklungsteile (35, 36) dieser Wicklung (35/36) bei in der Mittelstellung befindlicher Taststange (28) symmetrisch zu der Mitte des inneren Teils (12) der ferromagnetischen Rückschlußeinrichtung (11) liegen.

11. Längenmeßtaster nach Anspruch 3, dadurch gekennzeichnet, daß der äußere Teil (13) der ferromagnetischen Rückschlußeinrichtung (11) länger als der innere Teil (12) ist und daß der innere Teil (12) im wesentlichen symmetrisch bezüglich des äußeren Teils (13) angeordnet ist, derart, daß der äußere Teil (13) an beiden Enden um gleiche Beträge über den inneren Teil (12) übersteht.

12. Längenmeßtaster nach Anspruch 3, dadurch gekennzeichnet, daß die Taststange (28) in Büchsen (39, 41) in dem inneren Weil (12) der ferromagnetischen Rückschlußeinrichtung ( 4) längsverschieblich geführt ist.

13. Längenmeßtaster nach Anspruch 1, dadurch gekennzeichnet, daß der Grundkörper (2) an seiner Außenseite mit einer weichmagnetischen Abschirmung (38; 44) versehen ist.

14. Längenmeßtaster nach Anspruch 13, dadurch gekennzeichnet, daß die magnetische Abschirmung (38) zylindrisch ist.

15. Längenmeßtaster nach Anspruch 16, dadurch gekennzeichnet, daß die magnetische Abschirmung (44) ein quaderförmiges Gehäuse bildet, in dessen Innerem der Grundkörper (2 ) angeordnet ist.

16. Längenmeßtaster nach Anspruch 1, dadurch gekennzeichnet, daß die ferromagnetische Rückschlußeinrichtung (11) aus weichmagnetischem Material besteht.

17. Längenmeßtaster nach Anspruch 3, dadurch gekennzeichnet, daß der innere Teil (12) der ferromagnetischen Rückschlußeinrichtung (11) aus Ferrit besteht.

18. Längenmeßtaster nach Anspruch 3, dadurch gekennzeichnet, daß der äußere Teil (13) der ferromagnetischen Rückschlußeinrichtung (11), der eine rohrförmige Gestalt aufweist, aus einem bandförmigen Material (18) gewickelt ist.

19. Längenmeßtaster nach Anspruch 18, dadurch gekennzeichnet, daß das bandförmige Material (18) an seinem nach dem Wickeln in den Luftspalt (24) liegende Ende eine Kante (42, 43) aufweist, die nicht parallel zu der Mantellinie des äußeren Teiles (13) der ferromagnetischen Rückschlußeinrichtung (11) verläuft.

Fig. 1

Fig. 2

Fig. 3